# EUROPÄISCHE PATENTANMELDUNG

(11) **EP 3 591 310 A1**
(43) Veröffentlichungstag der Anmeldung: **08.01.2020**
(21) Anmeldenummer: 18181839.4
(22) Anmeldetag: 05.07.2018
(51) Int. Cl.: F24S 20/00, F28D 20/00, F24D 11/00

(54) **VERFAHREN UND VORRICHTUNG ZUR SPEICHERUNG EINER WÄRME**

(71) Anmelder: Siemens Aktiengesellschaft, 80333 München (DE)
(72) Erfinder: Amthor, Arvid, 98631 Grabfeld OT Nordheim (DE); Reißner, Florian, 90425 Nürnberg (DE)

(57) **Zusammenfassung**

Es wird ein Verfahren zur Speicherung und/oder Verwendung einer Wärme vorgeschlagen, bei dem die Wärme mittels einer Wärmepumpenanlage (2) und/oder einer Solarthermieanlage (4) erzeugt wird, und bei dem die erzeugte Wärme für eine in Bezug auf ihre Erzeugung wenigstens teilweise spätere Verwendung durch einen Wärmeverbraucher (6) wenigstens teilweise mittels eines wenigstens teilweise mit Wasser gefüllten Schwimmbeckens (42) gespeichert wird.

Weiterhin betrifft die Erfindung zwei Vorrichtungen zur Durchführung des Verfahrens.

## Beschreibung

Die Erfindung betrifft ein Verfahren zur Speicherung und/oder Bereitstellung und/oder Verwendung einer Wärme. Weiterhin betrifft die Erfindung eine Vorrichtung zur Durchführung eines Verfahrens gemäß der vorliegenden Erfindung und/oder einer ihrer Ausgestaltungen.

Im Rahmen der Energiewende wird angeregt eine Reduktion der Kohlenstoffdioxidemissionen mittels einer Bereitstellung von Wärme aus erneuerbaren Energien zu erreichen. Zur Erzeugung oder Bereitstellung erneuerbar erzeugter Wärme können Wärmepumpenanlagen oder Solarthermieanlagen verwendet werden. Insbesondere in Deutschland verzeichnen Wärmepumpenanlagen und Solarthermieanlagen hohe Zuwachsraten.

Typischerweise fallen Erzeugung der erneuerbar erzeugten Wärme und ihr Verbrauch durch einen Wärmeverbraucher zeitlich auseinander. Dieser Zusammenhang wird insbesondere im Hinblick auf Solarthermieanlagen deutlich, da hierbei die Erzeugung der Wärme ausschließlich bei Sonneneinstrahlung erfolgt. Wärme wird jedoch durch einen Wärmeverbraucher typischerweise über den ganzen Tag angefordert, insbesondere ebenfalls in den Abendstunden oder der Nacht, das heißt in sonnenfreien Zeiträumen des Tages. Vergleichbares gilt für Wärmepumpenanlagen, die ein intelligentes Energiemanagement aufweisen beziehungsweise in ein solches eingebunden sind. Auch bei Wärmepumpenanlagen ist es daher erforderlich, die Erzeugung der Wärme zeitlich von ihrem Verbrauch zu entkoppeln. Durch die genannte Entkopplung zwischen Erzeugung und Verbrauch der Wärme können Wärmepumpenanlagen in ein Energiemanagement, beispielsweise eines intelligenten Stromnetzes (englisch: Smart Grid), integriert werden, und beispielsweise gezielt in Zeiträumen mit geringen Strompreisen betrieben werden.

Aus dem Stand der Technik ist es bekannt für eine zeitliche Entkopplung von Erzeugung und Verbrauch von Wärme einen Wärmespeicher zu verwenden (thermischer Energiespeicher). Mittels des Wärmespeichers wird die Wärme wenigstens teilweise gespeichert beziehungsweise zwischengespeichert. Allerdings weisen Wärmespeicher hohe Investitionskosten und Betriebskosten auf. Typischerweise sind Wärmespeicher als großräumige Tanks oder Behälter ausgebildet, sodass diese einen großen Platzbedarf erfordern. Beispielsweise umfassen als Tanks ausgebildete Wärmespeicher ein Volumen von bis zu 50 Millionen Liter für kommerzielle Anlagen und bis zu 1000 Liter für private Anlagen, beispielsweise für ein Mehrfamilienhäuser oder Einfamilienhäuser.

Soll Wärme mittels eines Wärmespeichers gespeichert werden, so muss dieser typischerweise neu errichtet werden. Dadurch ergeben sich nachteiligerweise hohe Investitionskosten und ein hoher Platzbedarf.

Der vorliegenden Erfindung liegt die Aufgabe zu Grunde, die Effizienz einer bereits vorhandenen Infrastruktur in Bezug auf eine Speicherung von Wärme zu verbessern.

Die Aufgabe wird durch ein Verfahren mit den Merkmalen des unabhängigen Patentanspruches 1, durch eine Vorrichtung mit den Merkmalen des unabhängigen Patentanspruches 10, sowie durch eine Vorrichtung mit den Merkmalen des unabhängigen Patentanspruches 15 gelöst. In den abhängigen Patentansprüchen sind vorteilhafte Ausgestaltungen und Weiterbildungen der Erfindung angegeben.

Bei dem erfindungsgemäßen Verfahren zur Speicherung und/oder Verwendung einer Wärme wird die Wärme mittels einer Wärmepumpenanlage und/oder einer Solarthermieanlage erzeugt. Weiterhin wird erfindungsgemäß die erzeugte Wärme für eine in Bezug auf ihre Erzeugung wenigstens teilweise spätere Verwendung durch einen Wärmeverbraucher wenigstens teilweise mittels eines wenigstens teilweise mit Wasser gefüllten Schwimmbeckens gespeichert.

Ziel der vorliegenden Erfindung ist es daher nicht, dass Schwimmbecken mittels der zugeführten Wärme zu beheizen, sondern die Wärme für einen Wärmeverbraucher zu speichern und gezielt an diesen Wärmeverbraucher abzuführen.

Mit anderen Worten wird die durch die Wärmepumpenanlage und/oder die Solarthermieanlage erzeugte Wärme wenigstens teilweise mittels des Schwimmbeckens gespeichert oder zwischengespeichert. Die mittels des Schwimmbeckens gespeicherte Wärme wird für ihre spätere Verwendung durch den Wärmeverbraucher für diesen bereitgestellt. Mit anderen Worten wird mittels des Schwimmbeckens die Wärme wenigstens teilweise für den Wärmeverbraucher zwischengespeichert.

Hierbei ist ein Schwimmbecken beispielsweise ein Becken, das zum Baden, Schwimmen, Spielen und/oder für eine Schwimmsportart und/oder für andere Wassersportarten vorgesehen ist. Typischerweise ist das Schwimmbecken rechteckförmig und weist auf seinen dem Wasser zugewandten Innenflächen (Seitenflächen) eine Befliesung auf. Das Schwimmbecken kann privat oder kommerziell in Bezug auf seine Verwendung zum Baden betrieben werden. Ein Schwimmbad (kurz Bad) kann eines oder mehrere Schwimmbecken, die erfindungsgemäß zur Speicherung oder Zwischenspeicherung der Wärme vorgesehen sind, umfassen.

Das Schwimmbecken umfasst bezüglich seines Volumens wenigstens teilweise Wasser, wobei Wasser im Sinne der vorliegenden Erfindung breit zu verstehen ist, sodass dieses weitere Zusätze, insbesondere Chlor, aufweisen kann.

Erfindungsgemäß wird das wenigstens teilweise gefüllte Schwimmbecken als Wärmespeicher verwendet. Dadurch wird die vorhandene Infrastruktur der Schwimmbecken, beispielsweise in Bädern, für die Wärmespeicherung (Speicherung der Wärme) verwendet. Somit wird die bestehende Infrastruktur in Bezug auf die Speicherung von Wärme effizienter verwendet. Die Wärme, welche wenigstens teilweise mittels des Schwimmbeckens gespeichert wird, wird hierbei erneuerbar, das heißt mittels einer Wärmepumpenanlage und/oder einer Solarthermieanlage erzeugt. Dadurch können vorteilhafterweise Wärmespeicher eingespart oder wesentlich kleiner dimensioniert werden. Das Schwimmbecken wird somit für einen Badebetrieb und als Wärmespeicher verwendet. Dadurch können vorteilhafterweise Investitionskosten, Betriebskosten und der Platzbedarf für weitere Wärmespeicher reduziert oder eingespart werden.

Ein weiterer Vorteil der vorliegenden Erfindung ist, dass Schwimmbäder und die durch die Schwimmbäder umfassten Schwimmbecken typischerweise in der Nähe von Städten oder Gemeinden angeordnet sind. Dadurch weisen die Schwimmbäder beziehungsweise das oder die Schwimmbecken einen geringen Abstand zu potenziellen Wärmeverbrauchern auf. Vorteilhafterweise werden dadurch Wärmeverluste durch einen Transport der Wärme vom Schwimmbecken zum Wärmeverbraucher reduziert.

Weiterhin ist ein Vorteil der Solarthermieanlage, dass diese ganzjährig betrieben werden kann. Mit anderen Worten wird diese ebenfalls im Winter betrieben, wobei im Winter der Badebetrieb von beispielsweise Freibädern ausgesetzt ist. Durch die vorliegende Erfindung wird vorteilhaftweise das Freibad beziehungsweise wenigstens eines seiner Schwimmbecken ebenfalls im Winter verwendbar oder nutzbar.

In einer vorteilhaften Weiterbildung der Erfindung wird die Wärme saisonal oder ganzjährig mittels des Schwimmbeckens wenigstens teilweise gespeichert.

Mit anderen Worten wird ein saisonaler oder ganzjähriger Betrieb des Schwimmbeckens ermöglicht. Beispielsweise ist das Schwimmbecken als ein Freibad ausgebildet, welches im Winter für den Badebetrieb nicht verwendet wird. Eine wenigstens teilweise Speicherung der Wärme (Wärmespeicherbetrieb) kann jedoch im Winter erfolgen. Dadurch wird vorteilhafterweise das Schwimmbecken im Winter verwendbar. Hierbei ist aufgrund eines typischen Oberflächen-zu-Volumen-Verhältnisses von Schwimmbädern kein großer Austrag der Wärme zu erwarten, sodass die Wärme mittels des Schwimmbeckens ebenfalls im Winter ausreichend effizient gespeichert oder zwischengespeichert werden kann. Hierbei ist in den badefreien Zeiträumen, beispielsweise im Winter, die Temperatur des Wassers des Schwimmbeckens im Wesentlichen frei einstellbar, wobei baulich vorgegebene Rahmenbedingungen in Bezug auf die Temperatur des Wassers einzuhalten sind. Dadurch ist vorteilhafterweise eine erhöhte Varianz der Temperatur des Wassers des Schwimmbeckens in badefreien Zeiträumen möglich.

Gemäß einer vorteilhaften Ausgestaltung der Erfindung wird die Wärme mittels des Schwimmbeckens ausschließlich innerhalb von badefreien Zeiträumen erzeugt, und ausschließlich innerhalb der badefreien Zeiträume dem Schwimmbecken zur Speicherung wenigstens teilweise zugeführt.

Dadurch ist vorteilhafterweise eine höhere Varianz der Temperatur des Wassers des Schwimmbeckens möglich.

In einer vorteilhaften Weiterbildung der Erfindung ist hierbei das Schwimmbecken innerhalb der badefreien Zeiträume wenigstens teilweise mittels einer Wärmeisolation bedeckt.

Insbesondere ist die Wasseroberfläche des Schwimmbeckens mittels einer Wärmeisolation wenigstens teilweise bedeckt. Dies ist besonders im Winter von Vorteil, da dadurch die Effizienz der Speicherung der erzeugten Wärme mittels des Schwimmbeckens verbessert wird.

In einer vorteilhaften Weiterbildung der Erfindung wird die Temperatur des Wassers des Schwimmbeckens höchstens um 5 Kelvin, bevorzugt höchstens um 2 Kelvin, durch die gespeicherte Wärme erhöht.

Dadurch wird vorteilhafterweise ein Badbetrieb und ein Wärmespeicherbetrieb zeitgleich ermöglicht. Das ist deshalb der Fall, da die genannten Änderungen oder Schwankungen der Temperatur (Varianz der Temperatur) vorteilhafterweise von einem typischen Benutzer des Schwimmbeckens, insbesondere eines Badegastes, toleriert werden. Mit anderen Worten liegt dadurch die Temperatur des Wassers des Schwimmbeckens beziehungsweise die Temperatur des Schwimmbeckens vorteilhafterweise in der Komfortzone eines typischen Benutzers des Schwimmbeckens beziehungsweise Badegastes.

Gemäß einer vorteilhaften Ausgestaltung der Erfindung wird die mittels des Schwimmbeckens gespeicherte Wärme wenigstens teilweise dem Wärmeverbraucher zugeführt.

Vorteilhafterweise wird dadurch die mittels der Wärmepumpenanlage und/oder mittels der Solarthermieanlage erzeugte Wärme mittels des Schwimmbeckens für eine spätere Verwendung zwischengespeichert, wobei die zwischengespeicherte Wärme dem Wärmeverbraucher wenigstens teilweise für ihren Verbrauch zugeführt wird. Die dem Wärmeverbraucher zugeführte Wärme weist typischerweise eine Temperatur im Bereich um 25 Grad Celsius auf. Dieses vergleichsweise niedrige Temperaturniveau kann für einen Wärmeverbraucher, der eine Flächenheizung aufweist, ausreichend sein. Mit anderen Worten weist der Wärmeverbraucher bevorzugt eine Flächenheizung auf, wobei die mittels des Schwimmbeckens gespeicherte Wärme wenigstens teilweise der Flächenheizung zugeführt wird.

In einer vorteilhaften Weiterbildung der Erfindung wird die Temperatur des Wassers des Schwimmbeckens höchstens um 5 Kelvin bevorzugt höchstens um 2 Kelvin, durch die dem Wärmeverbraucher zugeführte Wärme verringert.

Vorteilhafterweise liegt dadurch die Temperatur des Wassers des Schwimmbeckens beziehungsweise des Schwimmbeckens innerhalb der Komfortzone eines typischen Benutzers des Schwimmbeckens, insbesondere eines typischen Badegastes.

Gemäß einer vorteilhaften Ausgestaltung der Erfindung wird die Temperatur der dem Wärmeverbraucher zugeführten Wärme vor ihrer Zuführung zum Wärmeverbraucher mittels einer weiteren Wärmepumpenanlage und/oder weiteren Solarthermieanlage erhöht.

Die weitere Wärmepumpenanlage kann mit der bereits vorhandenen Wärmepumpenanlage identisch sein.

Typischerweise weist die mittels des Schwimmbeckens gespeicherte Wärme ein niedriges Temperaturniveau, beispielsweise im Bereich von 25 Grad Celsius auf. Für einen Wärmeverbraucher mit einer Flächenheizung kann dieses niedrige Temperaturniveau ausreichend sein. Ist für den Wärmeverbraucher jedoch eine höhere Temperatur der Wärme erforderlich, so kann mittels der weiteren Wärmepumpenanlage und/oder der weiteren Solarthermieanlage die mittels des Schwimmbeckens zwischengespeicherte Wärme bezüglich ihres Temperaturniveaus aufgewertet werden. Beispielsweise wird der weiteren Wärmepumpenanlage die Wärme mit einer Temperatur von 25 Grad Celsius zugeführt und auf ein Temperaturniveau von 60 Grad Celsius erhöht. Aufgrund des bereits höheren Temperaturniveaus von 25 Grad Celsius kann vorteilhafterweise die weitere Wärmepumpenanlage besonders effizient betrieben werden. Mit anderen Worten weist diese in den genannten Temperaturbereichen einen hohen Leistungskoeffizienten (englisch: Coefficient of Performance; abgekürzt COP), insbesondere größer gleich 3, besonders bevorzugt größer gleich 4, auf.

In einer vorteilhaften Ausgestaltung der Erfindung wird die dem Wärmeverbraucher zugeführte Wärme mittels der weiteren Wärmepumpenanlage auf wenigstens eine Temperatur von 60 Grad Celsius erhöht.

Die erfindungsgemäße Vorrichtung zur Durchführung eines Verfahrens gemäß der vorliegenden Erfindung und/oder einer ihrer Ausgestaltungen umfasst wenigstens eine Wärmepumpenanlage zur Erzeugung einer Wärme, einen Wärmeverbraucher und ein wenigstens teilweise mit Wasser gefülltes Schwimmbecken. Die erfindungsgemäße Vorrichtung ist dadurch gekennzeichnet, dass die Wärmepumpenanlage, der Wärmeverbraucher und das Schwimmbecken derart thermisch gekoppelt sind, dass das Schwimmbecken als ein Wärmespeicher für die mittels der Wärmepumpenanlage erzeugte Wärme für den Wärmeverbraucher ausgebildet ist.

Die Wärmepumpenanlage kann eine Wärmepumpe umfassen beziehungsweise ist als Wärmepumpe ausgebildet.

Weiterhin umfasst der Wärmeverbraucher bevorzugt eine Flächenheizung. Die mittels des Schwimmbeckens gespeicherte Wärme ist wenigstens teilweise für die Flächenheizung vorgesehen.

Es ergeben sich zum erfindungsgemäßen Verfahren und/oder einer seiner Ausgestaltungen gleichartige und gleichwertige Vorteile der erfindungsgemäßen Vorrichtung.

Gemäß einer vorteilhaften Ausgestaltung der Erfindung ist das Schwimmbecken mit einem Kondensator der Wärmepumpenanlage thermisch gekoppelt.

Vorteilhafterweise wird dadurch die durch die Wärmepumpenanlage erzeugte Wärme wenigstens teilweise auf das Schwimmbecken beziehungsweise auf das Wasser des Schwimmbeckens übertragen. Hierzu kann eine Mehrzahl von Wärmetauschern vorgesehen sein. Mit anderen Worten ist das Schwimmbecken mit einer Wärmesenkenseite der Wärmepumpe thermisch, insbesondere fluidisch, gekoppelt. Der Wärmeverbraucher kann ebenfalls mittels einem oder mehrerer Wärmetauscher mit dem Schwimmbecken thermisch gekoppelt sein.

In einer vorteilhaften Weiterbildung der Erfindung weist das Schwimmbecken ein Verhältnis von seinem Volumen zu seiner Wasseroberfläche größer gleich 2 Meter auf.

Vorteilhafterweise wird durch dieses Verhältnis der Wärmeaustrag aus dem Schwimmbecken durch Verluste möglichst gering gehalten. Mit anderen Worten ist dadurch kein signifikanter Wärmeaustrag, selbst im Winter, zu erwarten.

Gemäß einer vorteilhaften Ausgestaltung der Erfindung weisen die Seitenwände und/oder der Boden des Schwimmbeckens eine Wärmeisolierung auf.

Vorteilhafterweise kann dadurch der Austrag von Wärme über die Wasseroberfläche beziehungsweise über die Seitenwände oder den Boden des Schwimmbeckens weiter verringert werden. Dadurch wird die energetische Effizienz der Wärmespeicherung und somit der Vorrichtung weiter verbessert.

In einer vorteilhaften Weiterbildung der Erfindung ist das Schwimmbecken als ein Freibad, ein Hallenbad oder ein Pool ausgebildet.

Hierbei kann das Schwimmbecken privat oder öffentlich oder gewerblich betrieben werden. Typischerweise weist ein Freibad mehrere Schwimmbecken beziehungsweise ein Hallenbad mehrere Schwimmbecken auf, die erfindungsgemäß zur Wärmespeicherung herangezogen werden können. Der Wärmeverbraucher kann über ein Fernwärmenetz mit dem Schwimmbecken thermisch gekoppelt sein.

Eine weitere erfindungsgemäße Vorrichtung zur Durchführung eines Verfahrens gemäß der vorliegenden Erfindung und/oder einer ihrer Ausgestaltungen umfasst eine Solarthermieanlage zur Erzeugung einer Wärme, einen Wärmeverbraucher und ein wenigstens teilweise mit Wasser gefülltes Schwimmbecken. Erfindungsgemäß werden das Schwimmbecken, der Wärmeverbraucher und die Solarthermieanlage derart thermisch gekoppelt, dass das Schwimmbecken als ein Wärmespeicher für die mittels der Solarthermieanlage erzeugte Wärme für den Wärmeverbraucher ausgebildet ist.

Es ergeben sich zum erfindungsgemäßen Verfahren und/oder einer seiner Ausgestaltungen gleichartige und gleichwertige Vorteile der weiteren erfindungsgemäßen Vorrichtung.

Weitere Vorteile, Merkmale und Einzelheiten der Erfindung ergeben sich aus den im Folgenden beschriebenen Ausführungsbeispielen sowie anhand der Zeichnungen. Dabei zeigen schematisiert:
- Figur 1: eine erste Ausgestaltung der vorliegenden Erfindung;
- Figur 2: eine zweite Ausgestaltung der vorliegenden Erfindung; und
- Figur 3: eine dritte Ausgestaltung der vorliegenden Erfindung.

Gleichartige, gleichwertige oder gleichwirkende Elemente können in einer der Figuren oder in den Figuren mit demselben Bezugszeichen versehen sein.

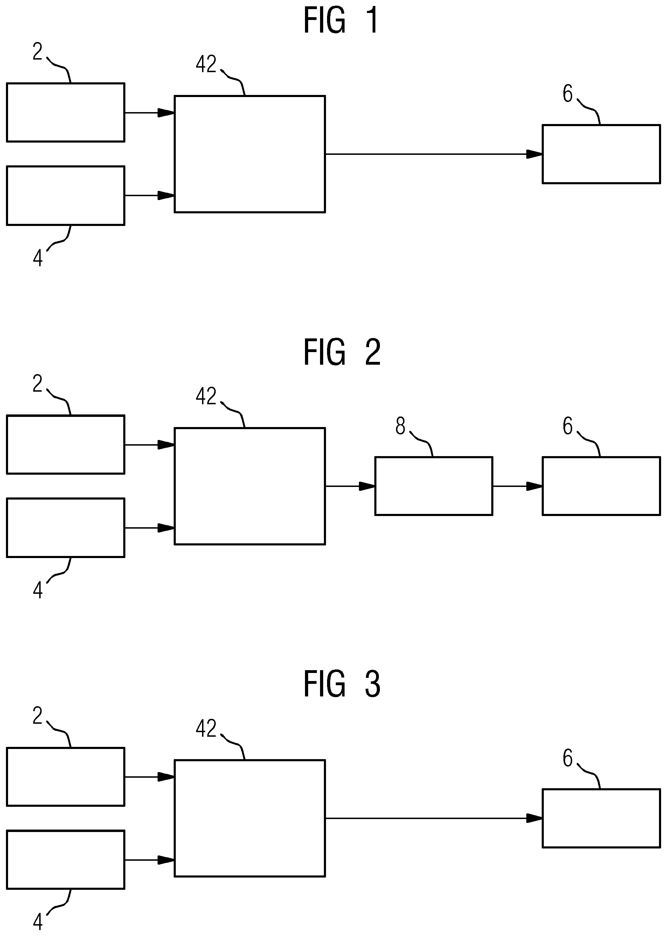

Figur 1 zeigt die erste Ausgestaltung der vorliegenden Erfindung.

Hierbei umfasst die Vorrichtung der ersten Ausgestaltung der vorliegenden Erfindung eine Wärmepumpe 2 und/oder eine Solarthermieanlage 4. Weiterhin umfasst die Vorrichtung ein Schwimmbecken 42 sowie einen Wärmeverbraucher 6.

Mittels der Wärmepumpe 2 und/oder der Solarthermieanlage 4 wird Wärme erzeugt. Da jedoch der Verbrauch der erzeugten Wärme durch den Wärmeverbraucher 6 von ihrer Erzeugung typischerweise zeitlich entkoppelt ist, wird erfindungsgemäß die erzeugte Wärme mittels des Schwimmbeckens 42 gespeichert beziehungsweise zwischengespeichert.

In Figur 1 erfolgen ein ganzjähriger Schwimmbetrieb des Schwimmbeckens 42 und eine ganzjährige Speicherung der erzeugten Wärme mittels des Schwimmbeckens 42. Mit anderen Worten wird das Schwimmbecken 42 zeitgleich für den Schwimmbetrieb und den Wärmespeicherbetrieb verwendet.

Der Wärmeverbraucher 6 ist thermisch, beispielsweise mittels eines Wärmetauschers, mit dem Schwimmbecken 42 gekoppelt. Mit anderen Worten ermöglicht die genannte thermische Kopplung eine Wärmeübertragung von dem Schwimmbecken 42 zum Wärmeverbraucher 6. Dadurch wird die mittels des Schwimmbeckens 42 gespeicherte und mittels der Wärmepumpe 2 und/oder der Solarthermieanlage 4 erzeugte Wärme wenigstens teilweise dem Wärmeverbraucher 6 zugeführt und durch diesen verwendbar, beispielsweise durch eine Flächenheizung des Wärmeverbrauchers 6.

Typischerweise weist die mittels des Schwimmbeckens 42 gespeicherte Wärme ein niedriges Temperaturniveau, beispielsweise von 25 Grad Celsius auf. Dieses vergleichsweise niedrige Temperaturniveau kann für einen Wärmeverbraucher 6, der beispielsweise eine Flächenheizung aufweist, ausreichend sein.

Die in Figur 1 dargestellten Pfeile verdeutlichen den Wärmefluss von der Erzeugung der Wärme durch die Wärmepumpenanlage 2 und/oder der Solarthermieanlage 4 über das Schwimmbecken 42 zum Wärmeverbraucher 6.

In Figur 2 ist die zweite Ausgestaltung der vorliegenden Erfindung dargestellt.

Hierbei umfasst die Vorrichtung eine Wärmepumpe 2 und/oder eine Solarthermieanlage 4. Weiterhin umfasst die Vorrichtung ein Schwimmbecken 42 sowie einen Wärmeverbraucher 6 und eine weitere Wärmepumpe 8. Mit anderen Worten zeigt Figur 2 dieselben Elemente wie bereits Figur 1, wobei die in Figur 2 dargestellte zweite Ausgestaltung gegenüber der in Figur 1 dargestellten ersten Ausgestaltung durch die weitere Wärmepumpe 8 ergänzt ist.

In Bezug auf das unter Figur 1 Gesagte kann mittels der weiteren Wärmepumpe 8 das typischerweise niedrige Temperaturniveau der mittels des Schwimmbeckens 42 gespeicherten Wärme beispielsweise von 25 Grad Celsius, aufgewertet und angehoben werden. Hierzu wird die mittels des Schwimmbeckens 42 gespeicherte Wärme wenigstens teilweise der weiteren Wärmepumpe 8 zugeführt. Mit anderen Worten wird das Schwimmbecken 42 als Wärmequelle für die weitere Wärmepumpe 8 verwendet. Mittels der weiteren Wärmepumpe 8 wird das Temperaturniveau von beispielsweise 25 Grad Celsius auf beispielsweise 60 Grad Celsius angehoben. Hierbei kann die weitere Wärmepumpe 8 energetisch besonders effizient betrieben werden, da dieser bereits Wärme mit einem Temperaturniveau von 25 Grad Celsius zugeführt wird. Mit anderen Worten ermöglicht die in Figur 2 dargestellte Ausgestaltung der vorliegenden Erfindung eine Bereitstellung der Wärme für den Wärmeverbraucher 6 mit einem hohen Temperaturniveau, beispielsweise oberhalb von 50 Grad Celsius, besonders bevorzugt oberhalb von 60 Grad Celsius. Die weitere Wärmepumpe 8 kann die Wärmewärmepumpe 2 sein.

Wie bereits unter Figur 1 wird die Wärme mittels der Wärmepumpe 2 und/oder mittels der Solarthermieanlage 4 erzeugt und mittels des Schwimmbeckens 42 zwischengespeichert. Die weitere Wärmepumpe 8 entnimmt wenigstens einen Teil der zwischengespeicherten Wärme und wertet deren Temperaturniveau auf, beispielsweise oberhalb von 60 Grad Celsius. Diese aufgewertete Wärme mit einem Temperaturniveau von wenigstens 50 Grad Celsius, insbesondere wenigstens 60 Grad Celsius, wird anschließend dem Wärmeverbraucher 6 für ihren Verbrauch zugeführt.

In Figur 3 ist die dritte Ausgestaltung der vorliegenden Erfindung dargestellt.

Hierbei weist die Figur 3 die dieselben Elemente wie bereits Figur 1 auf. Im Unterschied zur Figur 1 wird das Schwimmbecken 42 der Figur 3 saisonal betrieben, das heißt beispielsweise, dass im Winter ein badefreier Zeitraum vorliegt. Hierbei ist das Schwimmbecken 42 beispielsweise als Freibad ausgebildet, sodass im Winter der genannte badefreie Zeitraum vorliegt. Weiterhin kann das Schwimmbecken 42 zur Erhöhung der mittels des Schwimmbeckens 42 zwischengespeicherten Wärme eine Wärmeisolierung an seiner Wasseroberfläche, an seinen Seitenwänden und/oder seinem Boden umfassen.

Dadurch wird es möglich mittels des Schwimmbeckens 42 die Temperatur des Wassers des Schwimmbeckens 42 im Winter deutlich zu erhöhen. Beispielsweise ist eine Erhöhung der Temperatur des Wassers auf 50 Grad Celsius, bevorzugt auf 60 Grad Celsius, möglich. Mit anderen Worten wird die mittels der Wärmepumpe 2 und/oder der Solarthermie 4 erzeugte Wärme mit einer Temperatur von beispielsweise 50 Grad Celsius, insbesondere 60 Grad Celsius, mittels des Schwimmbeckens 42 zwischengespeichert. Hierbei ist typischerweise während der Speicherung der Wärme mit einer Temperatur von wenigstens 50 Grad Celsius oder wenigstens 60 Grad Celsius ein badefreier Zeitraum erforderlich ist.

Die mittels des Schwimmbeckens 42 auf einem hohen Temperaturniveau zwischengespeicherte Wärme kann, beispielsweise mit einer Temperatur von etwa 60 Grad Celsius, dem Wärmeverbraucher 6 zugeführt werden. Dadurch wird vorteilhafterweise dem Wärmeverbraucher 6 Wärme mit einem hohen Temperaturniveau bereitgestellt.

Mit anderen Worten ermöglicht die vorliegende Erfindung die Verwendung von bereits vorhandenen Schwimmbecken oder Bädern, beispielsweise Freibädern, für eine Speicherung oder Zwischenspeicherung von erneuerbar erzeugter Wärme, wobei die Wärme mittels einer Wärmepumpenanlage und/oder einer Solarthermieanlage erzeugt worden ist und für einen Wärmeverbraucher bereitgestellt wird oder vorgesehen ist. Die Wärmepumpenanlage und/oder die Solarthermieanlage sind somit nicht zur Beheizung des Schwimmbeckens für den Badbetrieb vorgesehen, sondern für die Erzeugung einer Wärme für einen Wärmeverbraucher, wobei die Wärme mittels des Schwimmbeckens gespeichert oder zwischengespeichert wird. Der Wärmeverbraucher ist insbesondere ein in Bezug auf das Schwimmbecken externer Wärmeverbraucher. Für das Schwimmbecken kann ein zum Speicherbetrieb gleichzeitiger Badebetrieb oder ein saisonaler Speicherbetrieb oder Badebetrieb vorgesehen sein.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

### Bezugszeichenliste

- 2: Wärmepumpenanlage
- 4: Solarthermieanlage
- 6: Wärmeverbraucher
- 8: weitere Wärmepumpenanlage
- 42: Schwimmbecken

## Patentansprüche

1. Verfahren zur Speicherung und/oder Verwendung einer Wärme, bei dem die Wärme mittels einer Wärmepumpenanlage (2) und/oder einer Solarthermieanlage (4) erzeugt wird, und bei dem die erzeugte Wärme für eine in Bezug auf ihre Erzeugung wenigstens teilweise spätere Verwendung durch einen Wärmeverbraucher (6) wenigstens teilweise mittels eines wenigstens teilweise mit Wasser gefüllten Schwimmbeckens (42) gespeichert wird.

2. Verfahren gemäß Anspruch 1, bei dem die Wärme saisonal oder ganzjährig mittels des Schwimmbeckens (42) wenigstens teilweise gespeichert wird.

3. Verfahren gemäß Anspruch 1 oder 2, bei dem die Wärme mittels des Schwimmbeckens (42) ausschließlich innerhalb von badefreien Zeiträumen erzeugt wird, und ausschließlich innerhalb der badefreien Zeiträume dem Schwimmbecken (42) zur Speicherung wenigstens teilweise zugeführt wird.

4. Verfahren gemäß Anspruch 3, beim dem eine Wasseroberfläche des Schwimmbeckens (42) innerhalb der badefreien Zeiträume mittels einer Wärmeisolation wenigstens teilweise bedeckt wird.

5. Verfahren gemäß einem der vorhergehenden Ansprüche, bei dem die Temperatur des Wassers des Schwimmbeckens (42) höchstens um 5 Kelvin, bevorzugt höchstens um 2 Kelvin, durch die gespeicherte Wärme erhöht wird.

6. Verfahren gemäß einem der vorhergehenden Ansprüche, bei dem die mittels des Schwimmbeckens (42) gespeicherte Wärme wenigstens teilweise dem Wärmeverbraucher (6) zugeführt wird.

7. Verfahren gemäß Anspruch 6, bei dem die Temperatur des Wassers des Schwimmbeckens (42) höchstens um 5 Kelvin, bevorzugt höchstens um 2 Kelvin, durch die dem Wärmeverbraucher (6) zugeführte Wärme verringert wird.

8. Verfahren gemäß Anspruch 6 oder 7, bei dem die Temperatur der dem Wärmeverbraucher (6) zugeführten Wärme vor ihrer Zuführung zum Wärmeverbraucher (6) mittels einer weiteren Wärmepumpenanlage (8) und/oder weiteren Solarthermieanlage erhöht wird.

9. Verfahren gemäß Anspruch 8, bei dem die Temperatur der dem Wärmeverbraucher (6) zugeführten Wärme mittels der weiteren Wärmepumpenanlage (8) auf wenigstens 60 Grad Celsius erhöht wird.

10. Vorrichtung zur Durchführung eines Verfahrens gemäß einem der Ansprüche 1 bis 9, umfassend eine Wärmepumpenanlage (2) zur Erzeugung einer Wärme, einen Wärmeverbraucher (6) und ein wenigstens teilweise mit Wasser gefülltes Schwimmbecken (42), **dadurch gekennzeichnet, dass** die Wärmepumpenanlage (2), der Wärmeverbraucher (6) und das Schwimmbecken (42) derart thermisch gekoppelt sind, dass das Schwimmbecken (42) als ein Wärmespeicher für die mittels der Wärmepumpenanlage (2) erzeugte Wärme für den Wärmeverbraucher (6) ausgebildet ist.

11. Vorrichtung gemäß Anspruch 10, **dadurch gekennzeichnet, dass** das Schwimmbecken (42) mit einem Kondensator der Wärmepumpenanlage (2) thermisch gekoppelt ist.

12. Vorrichtung gemäß Anspruch 10 oder 11, **dadurch gekennzeichnet, dass** das Schwimmbecken (42) ein Verhältnis von seinem Volumen zu seiner Wasseroberfläche größer gleich 2 Meter aufweist.

13. Vorrichtung gemäß einem der Ansprüche 10 bis 12, **dadurch gekennzeichnet, dass** die Seitenwände und/oder der Boden des Schwimmbeckens (42) eine Wärmeisolierung aufweisen.

14. Vorrichtung gemäß einem der Ansprüche 10 bis 13, **dadurch gekennzeichnet, dass** das Schwimmbecken (42) als ein Freibad, ein Hallenbad oder ein Pool ausgebildet ist.

15. Vorrichtung zur Durchführung eines Verfahrens gemäß einem der Ansprüche 1 bis 9, umfassend eine Solarthermieanlage (4) zur Erzeugung einer Wärme, einen Wärmeverbraucher (6) und ein wenigstens teilweise mit Wasser gefülltes Schwimmbecken (42), **dadurch gekennzeichnet, dass** die Solarthermieanlage (2), der Wärmeverbraucher (6) und das Schwimmbecken (42) derart thermisch gekoppelt sind, dass das Schwimmbecken (42) als ein Wärmespeicher für die mittels der Solarthermieanlage (4) erzeugte Wärme für den Wärmeverbraucher (6) ausgebildet ist.
